Europäisches Patentamt

European Patent Office

Office européen des brevets

(11) Numéro de publication: **0 305 622**

**A1**

## (12) DEMANDE DE BREVET EUROPEEN

(21) Numéro de dépôt: **87460015.8**

(22) Date de dépôt: **01.09.87**

(51) Int. Cl.⁴: **A01G 25/06**

(43) Date de publication de la demande:
**08.03.89 Bulletin 89/10**

(84) Etats contractants désignés:
**DE ES GB GR IT NL**

(71) Demandeur: **Mobillion, Roger**
**16, rue de Verdun**
**F-22190 PLERIN(FR)**

(72) Inventeur: **Mobillion, Roger**
**16, rue de Verdun**
**F-22190 PLERIN(FR)**

(74) Mandataire: **Martin, Jean-Jacques et al**
**Cabinet REGIMBEAU 11, rue Franz Heller**
**F-35700 Rennes(FR)**

(54) **Dispositif de micro-irrigation en sous-sol.**

(57) Ce dispositif a la forme générale d'un piquet qui est destiné à être enfoncé dans le sol et dont la partie supérieure comporte une chambre (30) pouvant être branchée à un conduit de distribution d'eau, cette chambre communiquant par l'intermédiaire d'un système de gouttage (9, 50) avec une enceinte (20, 12) qui débouche à l'extérieur du piquet par une ouverture (13) ; conformément à l'invention, le piquet est muni d'une rainure longitudinale (11) qui s'étend sensiblement sur toute sa longueur et l'ouverture (13) débouche dans l'extrémité haute de cette rainure, le piquet étant destiné à être enfoncé obliquement dans le sol, rainure tournée vers le haut.

Irrigation en sous-sol, pour tous types de végétation.

FIG.1

EP 0 305 622 A1

## DISPOSITIF DE MICRO-IRRIGATION EN SOUS-SOL.

La présente invention concerne un dispositif de micro-irrigation en sous-sol.

La micro-irrigation en sous-sol est une technique qui consiste à injecter de l'eau, éventuellement en même temps que des produits de traitement, goutte à goutte par le sous-sol, à proximité immédiate des racines des végétaux que l'on souhaite alimenter : plantes, arbres et arbustes diversère. Par ailleurs, l'irrigation se fait automatiquement une fois que le système a été mis en place, sans intervention d'une main d'oeuvre quelconque, ce qui est particulièrement intéressant dans les régions où la main d'oeuvre est rare ou chère.

La plupart des dispositifs d'irrigation connus mettent en oeuvre des pressions d'eau relativement élevées, ces dispositifs étant en outre complexes, coûteux et difficiles à utiliser ; l'eau est généralement injectée dans le sous-sol par des trous très petits (système capillaire) qui présentent l'inconvénient de se boucher fréquemment à cause des impuretés telles que des sels se trouvant dans l'eau, et de la flore, notamment des algues, qui se développe inévitablement dans les canalisations d'amenée d'eau.

On connaît également, par le document US-A-4 153 380, un dispositif d'irrigation en sous-sol qui a la forme générale d'un piquet destiné à être enfoncé dans le sol à irriguer. La partie supérieure de ce piquet comporte une chambre adaptée pour être branchée à un conduit de distribution d'eau, cette chambre communiquant par l'intermédiaire d'une valve distributrice rotative avec une enceinte ménagée à l'intérieur de piquet ; cette dernière débouche par une ouverture à l'extérieur du piquet, à peu près à mi-hauteur de celui-ci. Cette ouverture a une forme généralement annulaire, qui permet d'injecter l'eau arrivant dans l'enceinte tout autour du piquet dans le sous-sol. Le débit d'eau peut être réglé par rotation de la valve, et un système de repérage comprenant un index qui coopère avec une échelle graduée, permet d'afficher le débit de réglage.

Cette réalisation connue apparaît intéressante en raison de sa simplicité et, corrélativement, de son prix de revient modéré. Elle présente toutefois l'inconvénient de réaliser une injection d'eau très localisée, à la périphérie de l'ouverture annulaire prévue dans le piquet. En fonctionnement, le sous-sol va être rapidement saturé d'eau à ce niveau, et constituer un bouchon boueux annulaire, qui va empêcher que l'eau ne continue sa propagation régulièrement, de manière homogène et étendue, tout autour du piquet ; or, une telle propagation est recherchée, car elle forme un bulbe d'humidité, réalisant une alimentation parfaite des racines du végétal ou des végétaux concernés.

C'est pourquoi la présente invention vise à perfectionner ce dispositif connu, en proposant une dispositif nouveau qui, tout en étant simple, facile d'emploi,ne présente pratiquement de risque d'obturation et permette d'humidifier le sous-sol sans le saturer, de manière régulière et étendue à la fois verticalement et latéralement, pour former tout autour du piquet un bulbe d'humidité favorable au développement de la végétation se trouvant à proximité du piquet.

A cet effet, le dispositif de micro-irrigation en sous-sol qui fait l'objet de l'invention, comprend un piquet destiné à être enfoncé dans le sol, dont la partie supérieure comporte une chambre pouvant être branchée à un conduit de distribution d'eau, cette chambre communiquant par l'intermédiaire d'un système de gouttage avec une enceinte, et celle-ci débouchant à l'extérieur de piquet par une ouverture traversant la paroi de celui-ci ; ce dispositif est caractérisé par le fait que le piquet est creusé d'au moins une rainure longitudinale qui s'étend sensiblement sur toute la longueur de sa tige et que ladite ouverture débouche dans l'extrémité haute de la rainure, le piquet étant destiné à être enfoncé obliquement dans le sol, rainure tournée vers le haut.

Cette rainure va réaliser un drainage du terrain se trouvant tout au long du piquet, et y distribuer l'eau "à la demande", là où le milieu est encore sec, sans risque de saturation en des zones particulières.

Un dispositif conforme à la présente invention peut présenter avantageusement, en outre, une ou plusieurs des caractéristiques suivantes :

- le système de gouttage est un système à débit réglable comprenant une tige pointeau qui coopère avec un orifice de distribution ;

- la tige pointeau est portée par un bouchon fileté qui est vissé dans la partie supérieure du dispositif ;

- ce bouchon fileté est solidaire d'un index qui coopère avec une échelle graduée fixe pour afficher le débit de gouttage ;

- la partie supérieure du dispositif est amovible et peut être emmanchée sur l'extrémité supérieure de la tige de piquet ;

- cette partie supérieure amovible a la forme d'un capot qui recouvre l'extrémité haute de la rainure où débouche l'ouverture, et qui possède une embase adaptée pour s'appliquer contre la surface du sol lorsque le piquet y est enfoncé ;

- l'axe du piquet forme avec un axe perpendiculaire au plan de cette embase un angle aigu qui est compris entre 10° et 45°, de préférence de l'ordre de 25° ;

- l'enceinte comprend une cavité cylindrique formée à l'intérieur de la tige du piquet et adaptée pour recevoir des produits de traitement du sol, par exemple sous forme d'une cartouche soluble ;

- l'ouverture qui traverse la paroi du piquet a la forme d'une lumière dont la grande dimension s'étend suivant l'axe de la rainure ;

- la partie supérieure du dispositif est pourvue de deux raccords disposés coaxialement, et communiquant avec la chambre, l'un des raccords étant destiné à être branché à un conduit d'arrivée d'eau et l'autre à un conduit de sortie d'eau, ce qui permet le branchement en série de plusieurs de ces dispositifs, similaires ou identiques.

D'autres caractéristiques et avantages de l'invention apparaîtront de la description et des dessins annexés qui en présentent un mode de réalisation préfentiel.

Sur ces dessins :

- la figure 1 est une vue de côté du dispositif, coupée par le plan I-I de la figure 2 ;

- la figure 2 est une vue de face, partiellement coupée, du dispositif de la figure 1 ;

- la figure 3 est une section de la tige de piquet du dispositif de la figure 1, section correspondant au plan de coupe III-III de cette figure ;

- la figure 4 est une vue partielle de dessus du dispositif, qui montre le système d'affichage du débit de gouttage.

Le dispositif de micro-irrigation représenté sur les figures, comprend un piquet 1 destiné à être enfoncé dans le sol. Ce piquet est réalisé par exemple en matière plastique, mécaniquement résistante, moulée par injection. Il a la forme d'une tige généralement cylindrique 10, d'axe (YY'), à extrémité pointue 14 par exemple conique. Dans la paroi de la tige 10, est ménagée une rainure longitudinale 11, qui s'étend pratiquement sur toute la longueur de la tige, cette rainure s'arrêtant toutefois à la partie haute du piquet, à proximité de son extrémité ; à la partie basse, la rainure débouche dans la partie d'extrémité conique.

A l'intérieur du piquet, est prévue une cavité 12 par exemple sous forme d'un alésage cylindrique dont l'axe est décalé par rapport à l'axe (YY'), cet alésage s'étendant pratiquement sur toute la longueur de la tige ; il s'agit d'un alésage borgne qui débouche à la partie haute de la tige seulement.

L'alésage 12 communique avec l'extrémité supérieure de la rainure 11 par une ouverture allongée, ou lumière 13, traversant la paroi du piquet au niveau de l'extrémité supérieure de la rainure.

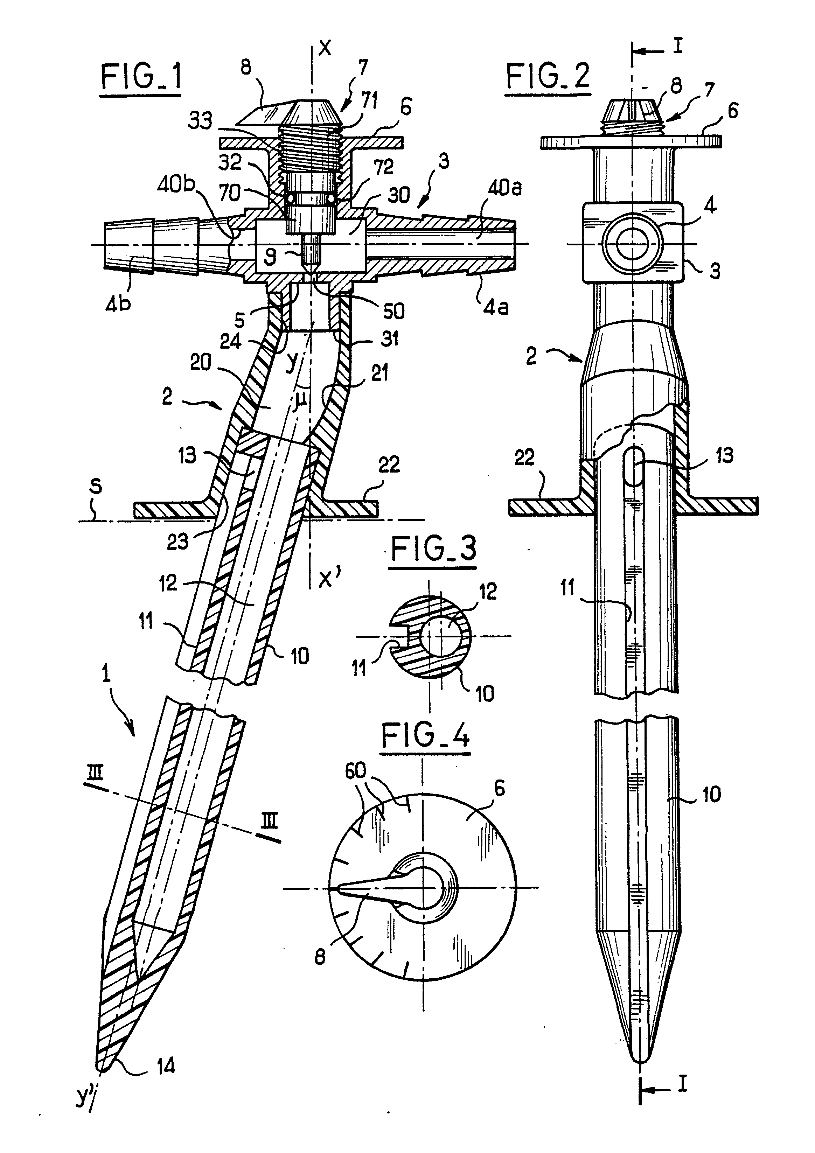

La partie supérieure du dispositif comprend un manchon 2, également en matière plastique, qui a une forme générale tubulaire coudée ; à sa partie inférieure, ce manchon présente un alésage 24 qui permet de l'adapter, avec une certain serrage, sur l'extrémité haute du piquet. Le manchon 2 est pourvu, à sa partie basse, d'une embase en forme générale de disque ; ce disque est situé sensiblement dans un plan perpendiculaire à un axe désigné (XX') ; lorsque le manchon 2 est placé sur le piquet 1, comme c'est le cas sur les figures 1 et 2, l'axe (XX') forme avec l'angle (YY') un angle aigu (q), cet angle étant avantageusement compris entre 10 et 45°, par exemple de l'ordre de 15 à 25°.

A la partie supérieure du manchon 2 est prévu un second alésage 24, d'axe (XX') ; ces deux alésages communiquent par une cavité ou enceinte 20.

L'alésage 24 est destiné à recevoir, également par emmanchement, le dispositif d'alimentation en eau et le système de gouttage qui équipe le dispositif ; ce système comprend une pièce 3 comportant une partie inférieure tubulaire 31 apte à s'emboîter dans l'alésage 24 ; sa partie centrale a la forme d'un boîter creux, dont la cavité intérieure ou chambre a été désignée par la référence 30 ; de celle-ci partent deux tubulures 4a, 4b qui forment des raccords destinés à être branchés sur des tuyaux d'amenée et de sortie d'eau ; les alésages 40a, respectivement 40b, de ces tubulures sont coaxiaux et situés de part et d'autre de la chambre 30 avec laquelle ils communiquent ; la partie supérieure de la pièce 3 présente un alésage d'axe (XX'), coaxial à la partie tubulaire 31.

Cet alésage possède une partie inférieure lisse 32 et une partie supérieure taraudée 33. La partie alésée lisse 32 débouche à la partie supérieure de la chambre 30 ; dans la paroi inférieure 5 de cette chambre, est percé un orifice 50, dont l'axe est également l'axe (XX').

Dans le trou taraudé 33 est vissé un bouchon 7 qui comprend une partie taraudée 71 et une partie lisse 70 s'adaptant dans le trou lisse 32 ; la partie lisse 70 est pourvue d'un joint d'étanchéité 72 ; la face inférieure du bouchon est solidaire d'une tige cylindrique 9, à extrémité conique, d'axe (XX') ; cette tige forme une tige pointeau, dont la descente (par manoeuvre du bouchon fileté 7) permet de venir obturer plus ou moins l'orifice 50 ; on a donc affaire à un système de réglage de débit à tige pointeau.

La position angulaire du bouchon 7 peut être repérée facilement grâce à un système d'affichage constituée par un index 8 solidaire du bouchon 7, cet index coopérant avec une échelle graduée angulaire 60 rapportée, par exemple gravée sur l'extrémité supérieure 6, en forme de disque, de la pièce 3.

Les dimensions du dispositif seront naturellement déterminés en fonction de la nature et des dimensions de la plante que l'on souhaite alimenter. A titre indicatif, la longueur du piquet peut s'inscrire dans une plage allant de 12 à 30 cm, son diamètre s'inscrivant dans une plage allant de 12 à 25 mm.

Nous allons maintenant expliquer de quelle manière on utilise ce dispositif pour l'irrigation en sous-sol de végétaux.

Le piquet 1 est tout d'abord enfoncé obliquement dans le sol, de façon à ce qu'il forme l'angle (u) avec la verticale, rainure 11 située sensiblement dans un place vertical et dirigée vers le haut.

A la fin de l'enfoncement, l'embase 22 vient s'appliquer contre la surface du sol, référencée (S) à la figure 1.

La partie 2 joue donc le rôle d'une garde qui limite l'enfoncement du piquet.

L'un des raccords 4a, 4b est branché à un tuyau d'arrivée d'eau, et l'autre raccord à un tuyau de sortie d'eau, le dispositif étant un élément d'un système d'irrigation constitué de plusieurs dispositifs placés en série (le tuyau de sortie de l'un des dispositifs constituant le tuyau d'entrée du dispositif suivant).

Le branchement peut être fait à une alimentation d'eau de pression modérée, soit au réseau urbain, soit à un réservoir naturel ou artificiel en charge ; une pression d'utilisation de l'ordre de 0,2 à 0,5 bar (0,2 à 0,5.10$^5$ Pa) est suffisante.

L'utilisateur manoeuvre le bouchon fileté 7, dans le sens du vissage ou du dévissage, afin de régler le débit d'injection d'eau, qui est déterminé par le rapprochement ou l'éloignement de la tige pointeau 9 par rapport à l'orifice de distribution 50. Ce réglage est facilité par la présence des graduations 60 qui coopèrent avec l'index 8 ; la plage des débits affichés peut par exemple aller de 0,25 à 5 litres par heure, ce qui permet de couvrir un grand nombre d'utilisations.

Grâce au branchement des raccords 4a et 4b, la chambre 30 est constamment approvisionnée en eau ; le système de gouttage 9, 50 va permettre un passage de gouttes d'eau de la chambre 30 dans l'enceinte située au-dessous du fond 5 de la chambre, c'est-à-dire dans les cavités 20 et 12 ; les gouttes d'eau tombent une à une par gravité, à une cadence qui dépend naturellement du réglage de débit préalablement effectué. Ces gouttes tombent sur une zone 21 de la paroi coudée de la cavité 20, cette zone ayant avantageusement été conformée pour présenter une légère concavité. Les gouttes tombant dans la cavité 20 sont donc amorties, déviées et guidées par la zone réceptrice 21, et descendent en douceur à l'intérieur de l'alésage 12. Lorsque cet alésage est rempli d'eau, celle-ci déborde par la lumière 13 et de nouvelles gouttes se forment, qui sont évacuées à l'extérieur du piquet dans la rainure 11 ; Cette rainure effectue alors un drainage goutte à goutte du terrain situé sur toute la longueur du piquet, humidifiant de manière homogène ce terrain pour former un bulbe d'humidité parfaitement régulier.

L'expérience a montré que pour un débit de l'ordre d'un litre par heure, et un piquet d'une longueur de 25 cm environ, on obtenait un bulbe d'humidité ayant un diamètre de l'ordre de 1,5 m et une profondeur de 0,8 m.

La présence d'eau en surface est insignifiante, de sorte que les pertes d'eau par évaporation sont négligeables.

L'utilisation de ce dispositif permet, par comparaison avec la technique d'aspersion d'obtenir une végétation plus fournie, avec une floraison plus précoce, une belle implantation des racines, sans vrilles ni retournements.

La partie 2 formant capot permet, comme cela a déjà été mentionné plus haut, de limiter la profondeur d'enfoncement du piquet 1, et aussi d'assurer une bonne inclinaison suivant l'angle (u) de ce piquet ; on notera, en outre, que le capot 2 recouvre complètement la partie haute de la rainure 11 ainsi que l'ouverture 13 de passage des gouttes. Grâce à ce recouvrement, il n'est pas possible aux petits animaux, oiseaux ou rongeurs, de venir lécher les gouttes émises à la partie supérieure du piquet. De plus, le capot 2 met l'ouverture 13 à l'abri de la lumière, ce qui limite le développement à ce niveau d'une flore parasitaire qui risquerait de provoquer à terme l'obstruction de l'ouverture, voire de la rainure.

L'orifice d'écoulement 50 des gouttes, qui coopère avec la tige pointeau 9, présente un diamètre relativement grand, de l'ordre de 4 à 5 mm par exemple, de sorte que cet orifice n'est normalement pas obstrué par les algues ou autres impuretés pouvant se trouver dans l'eau.

L'ensemble est facilement démontable, les parties 1, 2, 3 et 7 pouvant être désolidarisées les unes des autres au besoin, notamment pour le nettoyage.

Il est très facile d'utiliser ce dispositif pour procéder outre à l'irrigation, à l'apport d'un produit de traitement de la végétation, par exemple d'un fertilisant ou d'un produit herbicide ou insecticide ; il suffit pour cela d'introduire dans l'alésage 12 le produit en question, celui-ci pouvant être avantageusement prévu sous le forme d'une cartouche soluble s'adaptant dans l'alésage 12 ; ainsi, l'eau d'irrigation tombant goutte à goutte du système goutteur 9, 50 dans l'enceinte 12 va d'abord s'imprégner de ce produit, avant de ressortir par le trou 13 dans la rainure.

On remarquera la distribution du produit se fait en aval du système de gouttage 9, 50, si bien que ce dernier ne risque pas d'être obturé par les particules solides pouvant se trouvant dans le produit.

On remarquera également qu'il est très facile d'introduire le produit de traitement dans le piquet (en démanchant la partie supérieure) sans qu'on soit obligé de retirer le piquet du sol.

Il va de soi que l'invention n'est pas limitée au seul mode de réalisation préférentiel qui vient d'être décrit ; elle en englobe au contraire toutes les variantes.

C'est ainsi notamment que le piquet utilisé n'est par nécessairement creux ; l'alésage 12 de grande longueur pourrait être remplacé par une petite cavité réceptrice dont le fond se trouverait juste au-dessous du niveau de la lumière 13 ; pour que le dispositif fonctionne convenablement, il suffit que la cavité réceptrice des gouttes émises par le système de gouttage permettent de constituer une petite réserve d'eau, et que cette eau puisse ressortir par débordement par la lumière 13, ce débordement reformant la goutte qui peut alors suinter à l'intérieur de la rainure 11.

A la partie supérieure du dispositif, il serait possible de prévoir un seul raccord 4 pour l'arrivée d'eau, ceci dans le cas ou le dispositif est destiné à être branché en parallèle et non en série (et pour le dernier dispositif de la série).

Au lieu de prévoir une liaison des différentes pièces constitutives du dispositif par simple emmanchement, on pourrait prévoir une liaison différente par exemple avec un verrouillage du type baïonnette ou un vissage.

L'ouverture allongée 13 pourrait être remplacée par deux trous plus petits situés l'un au-dessus de l'autre.

Enfin, il serait possible de prévoir sur un même piquet plus d'une rainure d'écoulement de la goutte, par exemple une série de rainures disposées côte à côte sur le piquet, ce dernier ayant alors une forme aplatie (palette).

L'outil qui fait l'objet de l'invention est parfaitement adapté à l'alimentation en eau en sous-sol de toutes les plantes et essences connues en agronomie, l'irrigation se faisant par les racines quelles que soient la profondeur d'enracinement et la nature du sol. Il peut fonctionner en continu sans intervention humaine et pratiquement sans entretien et s'adapte à tout les types de terrain.

## Revendications

1. Dispositif de micro-irrigation en sous-sol, qui comprend un piquet destiné à être enfoncé dans le sol, dont la partie supérieure comporte une chambre pouvant être branchée à un conduit de distribution d'eau, cette chambre (30) communiquant par l'intermédiaire d'un système de gouttage (9, 50) avec une enceinte (20 - 12), et celle-ci débouchant à l'extérieur du piquet par une ouverture (13) traversant la paroi de celui-ci, caractérisé par le fait que ledit piquet (1) est creusé d'au moins une rainure longitudinale (11) qui s'étend sensiblement sur toute la longueur de sa tige (10) et que ladite ouverture (13) débouche dans l'extrémité haute de cette rainure (11), le piquet (1) étant destiné à être enfoncé obliquement dans le sol, rainure (11) tournée vers le haut.

2. Dispositif selon la revendication 1, caractérisé par le fait que le système de gouttage est un système à débit réglable, comprenant une tige pointeau (9) coopérant avec un orifice de distribution (50).

3. Dispositif selon la revendication 2, caractérisé par le fait que la tige pointeau (9) est portée par un bouchon fileté (7) qui est vissé dans la partie supérieure du dispositif.

4. Dispositif selon la revendication 3, caractérisé par le fait que le bouchon fileté (7) est solidaire d'un index (8) qui coopère avec une échelle graduée fixe (60) pour afficher le débit de gouttage.

5. Dispositif selon l'une des revendications 1 à 4, caractérisé par le fait que la partie supérieure (2, 3) du dispositif est amovible, et peut être emmanchée sur l'extrémité supérieure de la tige de piquet (10).

6. Dispositif selon la revendication 5, caractérisé par le fait que la partie supérieure amovible (2, 3) a la forme d'un capot qui recouvre l'extrémité haute de la rainure (11) où débouche l'ouverture (13), et qui possède une embase (22) adaptée pour s'appliquer contre la surface du sol lorsque le piquet y est enfoncé.

7. Dispositif selon la revendication 6, caractérisé par le fait que l'axe $(YY')$ du piquet forme avec un axe $(XX')$ perpendiculaire au plan de l'embase un angle aigu (u) qui est compris entre $10°$ et $45°$, de préférence de l'ordre de $25°$.

8. Dispositif selon l'une des revendications 1 à 7, caractérisé par le fait que ladite enceinte comprend une cavité cylindrique (12) formée à l'intérieur de la tige de piquet (10) et adaptée pour recevoir des produits de traitement du sol.

9. Dispositif selon l'une des revendications 1 à 8, caractérisé par le fait que ladite ouverture (13) qui traverse la paroi du piquet a la forme d'une lumière dont la grande dimension s'étend suivant l'axe de la rainure (11).

10. Dispositif selon l'une des revendications 1 à 9, caractérisé par le fait que la partie supérieure (3) du dispositif est pourvue de deux raccords (4a, 4b) disposés coaxialement et communiquant avec la chambre (30) l'un des raccords étant destiné à être branché à un conduit d'arrivée d'eau et l'autre à un conduit de sortie d'eau, ce qui permet le branchement en série de plusieurs dispositifs similaires.

FIG_1

FIG_2

FIG_3

FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 432 291 (SHIRLEY)<br>* revendications; figures *<br>--- | 1 | A 01 G 25/06 |
| D,A | US-A-4 153 380 (HARTMAN)<br>* revendications; figures *<br>----- | 1 | |

DOMAINES TECHNIQUES RECHERCHES (Int. Cl.4)

A 01 G 25/00

Le présent rapport a été établi pour toutes les revendications

| Lieu de la recherche | Date d'achèvement de la recherche | Examinateur |
|---|---|---|
| BERLIN | 17-03-1988 | WUNDERLICH J E |

EPO FORM 1503 03.82 (P0402)